# EUROPEAN PATENT SPECIFICATION

(11) **EP 4 375 508 B1**
(45) Date of publication and mention of the grant of the patent: **04.03.2026**
(21) Application number: 23209534.9
(22) Date of filing: 13.11.2023
(51) Int. Cl.: F04B 39/00, F04B 27/053, F04B 39/02

(54) **MODULAR RECIPROCATING COMPRESSOR WITH RADIAL CYLINDERS AND INNOVATIVE LUBRICANT NETWORK**
MODULARER HUBKOLBENVERDICHTER MIT RADIALEN ZYLINDERN UND INNOVATIVEM SCHMIERMITTELNETZWERK
COMPRESSEUR ALTERNATIF MODULAIRE À CYLINDRES RADIAUX ET RÉSEAU DE LUBRIFIANT INNOVANT

(30) Priority: 22.11.2022 IT 202200024036
(43) Date of publication of application: 29.05.2024
(73) Proprietor: Officine Mario Dorin S.p.A, 50061 Fiesole (FI) (IT)
(72) Inventor: Dorin, Mario, 50065 Pontassieve (FI) (IT); Dallai, Mauro, 50126 Firenze (FI) (IT); Lenzi, Giulio, 50134 Firenze (FI) (IT)
(74) Representative: Fanfani, Stefano

(56) References cited:
- WO-A1-2018/058100
- CN-A- 107 120 432
- GB-A- 654 965
- JP-A- S59 158 389
- JP-A- S59 190 486
- KR-A- 20150 063 063
- US-A- 2 151 402
- US-A- 2 280 296
- US-A- 2 668 004
- US-A- 2 676 753
- US-A- 3 130 901
- US-A1- 2006 171 824
- US-A1- 2014 294 643

## Description

### Technical field

The present invention belongs to the technical field of high-pressure reciprocating compressors, typically used in the field of refrigeration and particularly in the field of carbon dioxide (CO₂) compressors for trans-critical and sub-critical applications.

Specifically, the present invention relates to a compressor comprising one or more modules, each of which comprises a plurality of radial cylinders inside of which pistons slide, the connecting rods of said pistons receiving motion from the same bushing mounted on the crankshaft.

### Present status of the art

In the field of reciprocating compressors for the refrigeration industry, reciprocating compressors for trans-critical and sub-critical carbon dioxide applications reach very high operating pressures, typically ranging from 0.6 to 15 MPa absolute pressure. This is one of the critical aspects that must be addressed in their design, with particular regard to the dimensions of the crankshaft and its bushings, particularly the bushings located at the big end of the connecting rods.

In fact, in order to limit the specific load the latter are subjected to, their surface area must be increased; however, it is not advisable to increase the contact surface area by increasing the inner diameter of the bushings, because this would result in an increase of the sliding speed with a consequent increased wear of the bushings and a decrease in their service life. Therefore, the practice adopted is to compensate for the increased load by increasing the length of the bushings.

However, this solution has negative implications for the crankshaft, which must inevitably be axially lengthened as a consequence of the elongation of the bushings and, at the same time, cannot have its cross-sectional area increased so as not to increase the diameter and sliding speed of the bushings.

It should be specified that, in compressors, the sliding contacts to be lubricated are mainly the bushings and the cylinders where the pistons slide. In compressors equipped with a lubricant distribution pump, lubrication of the bushings takes place through a plurality of ducts defined in the crankshaft and connecting rods, as well as in the bushings themselves, thanks to which the lubricant, pushed by the pressure exerted by the pump, reaches the small end of the connecting rod and from there exiting transversely also lubricates the cylinder inner walls.

This technical solution is particularly appreciated in reciprocating compressors for refrigeration systems because it reduces the undesirable effect of lubricant being carried away by the process fluid; in fact, thanks to the aforementioned internal ducts, the lubricant can be delivered directly to the crank gears, exclusively where it is needed.

A channel is defined in the big end bushing of each connecting rod that allows the passage of lubricant from an axial duct inside the crankshaft to a longitudinally defined duct in the connecting rod shaft. However, the presence of such a channel implies a disadvantageous reduction in the bearing surface of the connecting rod and an increase in the specific load on the bushing, which consequently tends to wear prematurely. To overcome this drawback, it is generally necessary to increase the size of the bushing and more specifically its length since, as already explained, an increase in diameter would result in an undesirable increase in sliding speed.

The elongation of the big end bushing of each connecting rod results in a disadvantageous increase in the length of the crankshaft, which consequently is subject to greater flexure; this adversely affects the longevity of the bushings themselves since, as is well known, they must work on cylinders that are parallel to each other.

Normally, the crankshaft is rotatably coupled to the compressor casing by means of two main bushings placed at each of its ends, respectively. Consequently, as operating pressures increase and the intermediate bushings thus have to be lengthened, an increase in the effective length of the crankshaft is inevitable, which, however, cannot be compensated for by an increase in its cross-sectional area because doing so would increase the sliding speed of the bushings, which would wear too quickly.

Compressors of this type are often partitioned into six, eight or more cylinders so their crankshafts can reach significant lengths. The solution generally adopted to limit crankshaft stresses involves reducing the effective length by inserting one or more intermediate bushings.

This solution implies greater construction complexity of the compressor, with a parallel increase in cost and also in axial dimensions.

Japanese patent application JP S59 158389 A relates to a multi-cylinder reciprocating air compressor with a shortened crankshaft showing a plurality of cylinders on the same plane extending radially outward from a central ring member circumferentially surrounding the lateral surface of the eccentric portion of the crankshaft. However, in this compressor all moving elements of the crank mechanism must be lubricated by applying lubricating oil externally to the visible surface of the various rotational couplings, with the obvious disadvantage that some of the lubricant inevitably ends up in the crankcase or is carried away by the process fluid, and also that operation of the compressor must be stopped. The technical problem addressed in D1 is to reduce the overall length and weight of the compressor by employing multiple articulated connecting rods connected to the same central ring member, however, D1 does not explain how to solve the problem of reducing the stresses on the bearing surface of the rotary coupling between the crankshaft and the ring member.

The patent applications US 2006/171824 A1 and US 3 130 901 A are very interesting examples of the prior **art.**

### Objects and summary of the invention

The objective of the present invention is to develop a compressor with an innovative architecture, capable of using long, small-diameter bushings that work with a low specific pressure and without the need for intermediate bushings; thus, a compressor in which, for the same number of cylinders, the crankshaft supports fewer bushings than in compressors of the known type and is therefore shorter, making the compressor particularly compact.

A further objective of the present invention is to provide a compressor of the aforementioned type in which the sliding surfaces, particularly the sliding surfaces of the big end bushings of the connecting rods, are lubricated by means of ducts formed internally in the crankshaft and the shafts of the connecting rods themselves. Compared with known type compressors, this solution advantageously also achieves the further important goal of reducing the dispersion of the lubricant in the process fluid.

Not the least objective of the invention is to reduce the load that the lubrication pump imposes on the engine, in fact, thanks to the technical solution subject of the present invention, a smaller amount of oil overall circulating within the compressor is sufficient.

This and other objectives, which will become clear to the person skilled in the art by reading this document, are achieved by grouping the cylinders of the reciprocating compressor into one or more modules of coplanar cylinders and by realizing an innovative architecture that includes a lubricant distribution network also defined internally to the different components of the kinematic mechanisms of the compressor. According to the invention, a reciprocating compressor as defined in independent claim 1 is provided.

Each module may comprise two or more cylinders, whose pistons share the same bushing on the crankshaft. Similarly to radial engines, in each module, the connecting rod assembly provides a master connecting rod for a first piston, while the pistons of the other cylinders in the same module are driven by means of smaller connecting rods, called articulated connecting rods; the big ends of the latter are rotationally connected to the big end of the master connecting rod of the first piston of the module.

In order to reduce the specific pressure on the bushings as much as possible, it is important to properly evaluate the angle opening between the master connecting rod and the articulated connecting rods.

The outer edge of the big end of the master connecting rod comprises means of rotational coupling to the big ends of the articulated connecting rods; generally, the connection between the articulated rods and the master rod is achieved by means of pins.

Lubrication of the sliding surfaces is achieved by means of a lubricant distribution network that comprises a set of internal ducts defined inside the crankshaft, in the shafts of the master connecting rods and the articulated connecting rods, and in the means of rotational connection between master connecting rods and articulated connecting rods of each module, as well as by means of channels passing through the bushings themselves. In compressors equipped with an oil pump, lubricant is forced into these ducts by the work provided by the pump itself, the latter drawing lubricant from a collection area generally located at the bottom of the compressor casing.

During crankshaft rotation, only the big end of the master connecting rod moves along a circular trajectory, while the big ends of the articulated connecting rods, not coinciding with the center of rotation, move along elliptical trajectories. Although this connection can be seen as mechanically incorrect because of the different center of rotation of the master connecting rod compared to the articulated connecting rods, the resulting drop in efficiency can be regarded as very limited.

Typically, with this configuration, each module comprises two or three cylinders; in the case of modules with only two cylinders, the cylinders are arranged in a V.

Compared with conventional compressor of known type with the same number of pistons, the present invention employs fewer bushings; in addition, these bushings are longer and have a smaller diameter than the bushings of known type used in conventional compressors. This arrangement makes it possible to increase the cross-sectional area of the lubricant passage channel defined in the bushings without adversely affecting the specific load and service life of the bushings; in addition, the larger channel size makes it possible to employ a less powerful lubricant distribution pump, which further reduces the load on the compressor motor.

### Brief description of the drawings

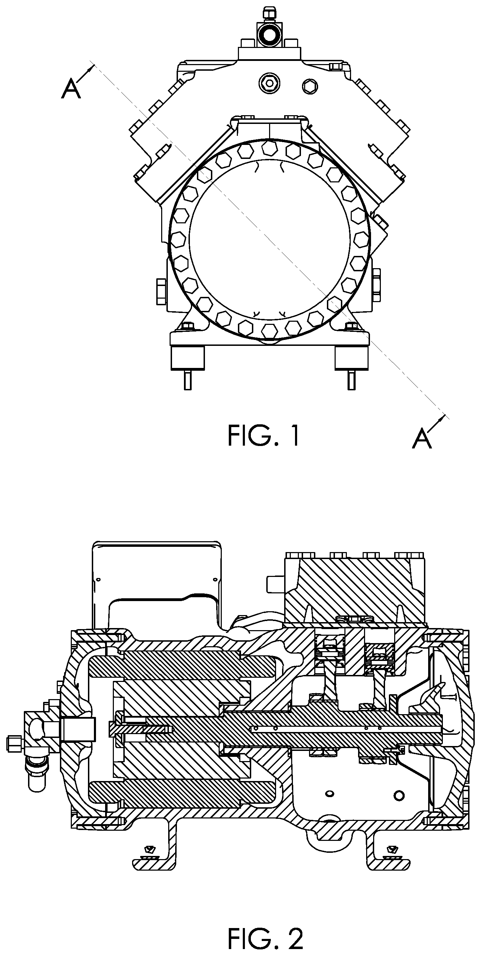

Fig. 1 shows a view of a closed compressor, showing the longitudinal section plane A-A.
Fig. 2 shows a longitudinal sectional view according to the A-A plane of a conventional compressor with four cylinders.

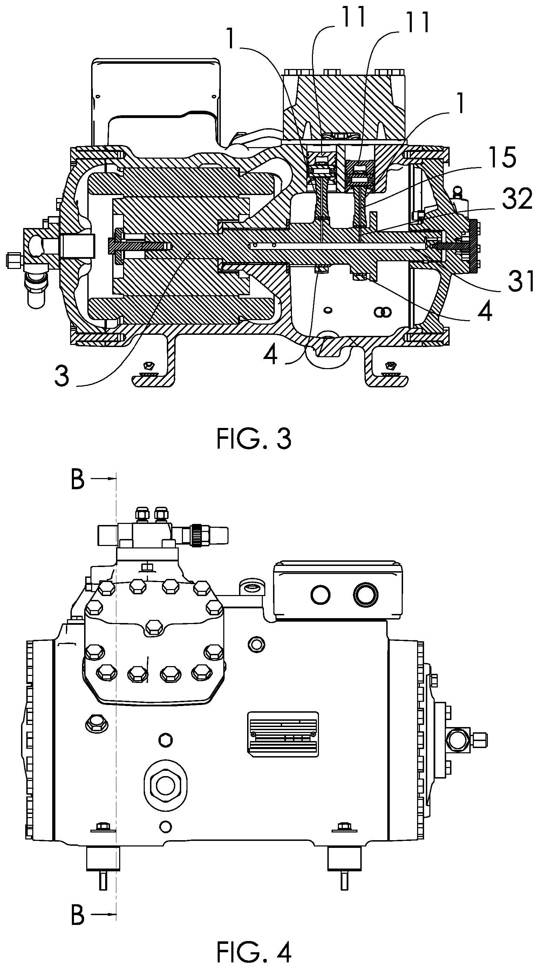

Fig. 3 shows a longitudinal sectional view according to the plane A-A of a compressor according to the present invention with two groups of two cylinders each.
Fig. 4 shows a view of a closed compressor, with the B-B cross-sectional plane indicated.

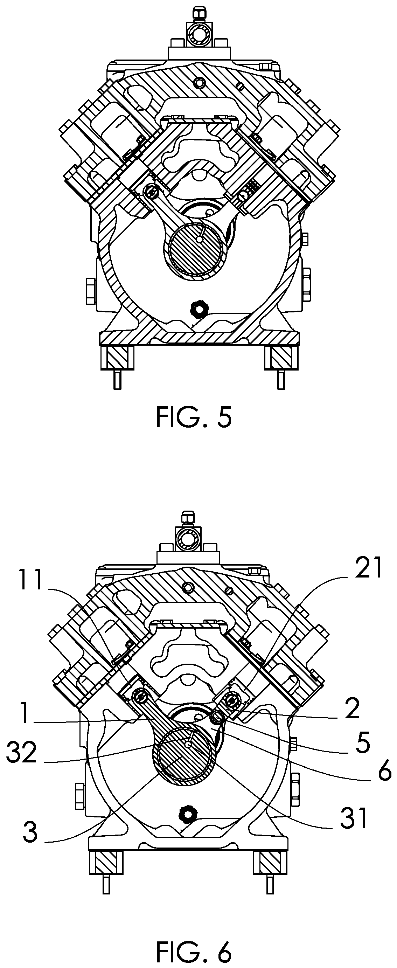

Fig. 5 shows a cross-sectional view according to the B-B plane of a conventional compressor with four cylinders.
Fig. 6 shows a cross-sectional view according to the B-B plane of a compressor according to the present invention with two groups of two cylinders each.

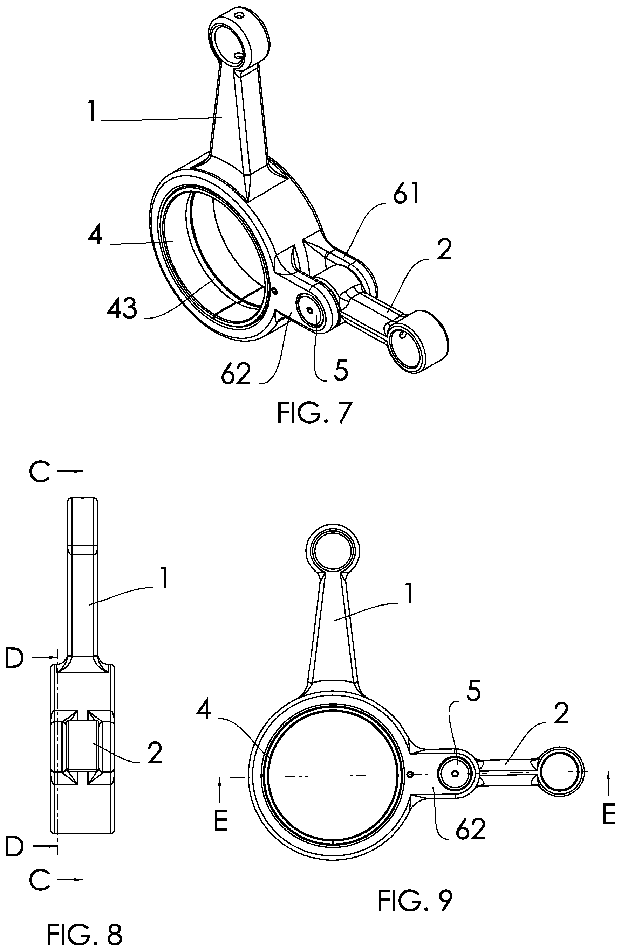

Fig. 7 shows a perspective view of a master connecting rod (1), on the big end of which is rotationally coupled the big end of an articulated connecting rod (2), according to an axis parallel to the axis of the crankshaft (3).
Figs. 8 and 9 are a side view and a front view, respectively, of the master connecting rod (1) and the related articulated connecting rod (2) shown in Fig. 7; section planes C-C, D-D, and E-E referred to in the following figures are indicated.

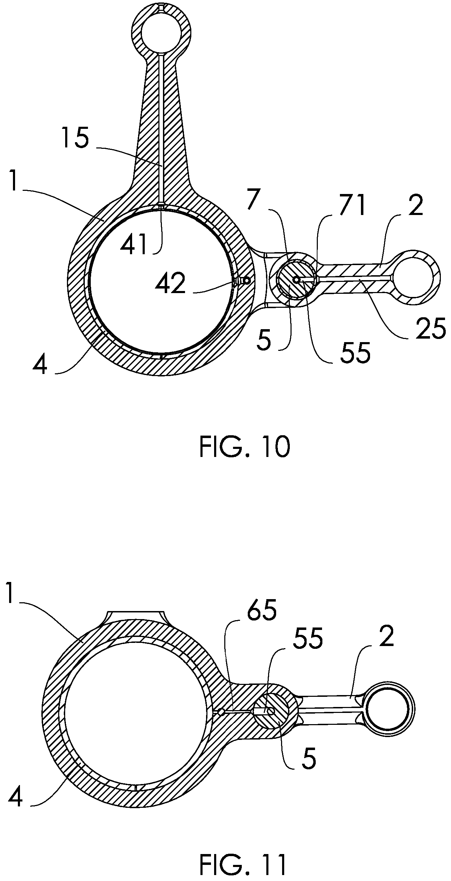

Fig. 10 shows the C-C section of the master connecting rod (1) and articulated connecting rod (2).
Fig. 11 shows the D-D section of the master connecting rod (1) and articulated connecting rod (2).

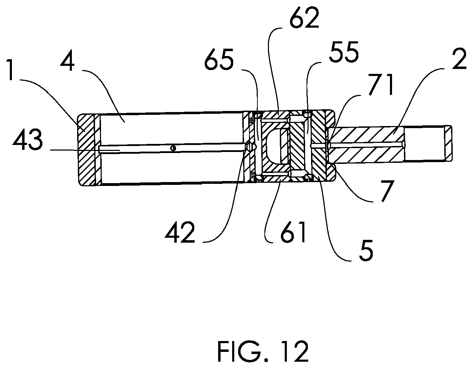

Fig. 12 shows the E-E section of the master connecting rod (1) and articulated connecting rod (2).

### Detailed description of an embodiment of the invention

A reciprocating compressor comprising a plurality of cylinders, driven by the same crankshaft (3) and grouped in one or more modules, each of said modules comprising a first cylinder whose piston (11) is driven via a master connecting rod (1) and one or more cylinders whose pistons (21) are driven via a respective articulated connecting rod (2) whose big end is rotationally coupled to the extremity of an element (6) protruding from the outer edge of the big end of said master connecting rod (1); the latter is coupled to the crankshaft (3) by means of a single master bushing (4). Said master bushing (4) is forcibly fitted into the big end of the master connecting rod (1) creating a fixed interference fit with it.

The embodiment illustrated in the attached figures shows a compressor comprising two modules, each comprising a master connecting rod and an articulated connecting rod, the latter being rotationally coupled to the extremity of an element protruding from the outer edge of the master connecting rod itself. Various embodiments of the invention, falling within the same inventive concept, are, of course, possible, in which each module comprises a master connecting rod and a plurality of articulated connecting rods, each rotationally coupled to the extremity of a corresponding element protruding from the outer edge of the master connecting rod.

In the preferred embodiment described herein, the big end of each articulated connecting rod (2) is rotationally coupled to the extremity of the respective protruding element (6) by means of a pin (5) that is integrally connected to said protruding element (6), e.g., it is fixed with interference to the protruding element (6). More specifically, the big end of each articulated connecting rod (2) is rotationally connected to a respective pin (5) of a protruding element by means of a secondary bushing (7), the latter being forcibly fitted into the big end of the articulated connecting rod (2).

According to an advantageous embodiment, the bushings are lubricated, for example, by special conduits that deliver the lubricant directly in correspondence with the sliding surfaces. Such conduits are defined internally within the crankshaft, within the master connecting rod and within each of the elements protruding from the outer edge of it, as well as within the shaft of the articulated connecting rods and within their respective rotational coupling means, in particular, in the master bushing and secondary bushing, special cavities are defined, such as superficial channels and/or radial holes, which allow the lubricant to pass through.

In the embodiment shown in the attached figures, a main conduit (31) for the distribution of lubricant is defined internally to the crankshaft (3) along the longitudinal axis of the crankshaft; in the embodiment herein described, one end of said main conduit (31) is connected to the output of an oil pump. In the same crankshaft (3), in a transverse direction with respect to the axis of said crankshaft, one or more secondary conduits (32) are also defined extending from said main conduit (31) to the outer lateral surface of said crankshaft; said one or more secondary conduits (32) are defined transversely within the crankshaft (3) in correspondence with the surfaces in which the master bushings (4) of each of the modules are rotationally coupled, in particular at least one secondary conduit (32) is provided in correspondence with each of the master bushings (4).

In a preferred embodiment, each protruding element (6) comprises two lobes (61, 62) lying on two parallel planes orthogonal to the axis of the crankshaft (3) and protruding from the outer edge of the big end of said master connecting rod (1) in a radial direction with respect to the axis of the crankshaft (3). The two ends of each pin (5) are connected to a respective lobe (61, 62) of a corresponding protruding element (6), while a respective articulated connecting rod (2) is rotationally connected to the central portion of the pin (5) by means of a secondary bushing (7).

On the extrados, or outer surface, of said master bushing (4) are defined a first hole (41) and at least one second hole (42) that communicate internally with a circumferential channel (43) defined on the intrados, or inner surface, of said master bushing (4). In practice, said first (41) and second (42) holes are through holes that go through the thickness of said master bushing (4) and put the outer surface of the master bushing in communication with the circumferential channel (43) defined on the inner surface of the master bushing itself. The circumferential channel (43) of each master bushing (4) is located in correspondence with a cross-section of the crankshaft (3) in which one or more of said secondary conduits (32) are defined.

Internally to the shaft of the master connecting rod (1) a longitudinal conduit (15) is defined, substantially arranged along the longitudinal axis of the shaft and extending from the big end to the small end of the same connecting rod, in particular said conduit extends from the inner surface of the big end of the mater connecting rod, to which the master bushing (4) is integrally connected, to the inner surface of the small end of the mater connecting rod, to which the pin of the corresponding piston (11) is coupled. On the inner surface of the big end of said master connecting rod (1), the inlet of said longitudinal conduit (15) is located in correspondence with the aforementioned first hole (41) defined on the outer surface of the master bushing (4).

An intermediate conduit (65) is also defined inside each protruding element (6), extending from the inner surface of the big end of the master connecting rod (1) to the coupling surface between the protruding element (6) and the pin (5). Said intermediate conduit (65) comprises at least one inlet port on the inner surface of the big end of the master connecting rod (1) and at least one outlet port on the coupling surface between the protruding element (6) and the pin (5), said inlet port being located in correspondence with a second hole (42) defined on the outer surface of the master bushing (4). In the embodiment shown in the attached figures, said intermediate conduit (65) extends within both said lobes (61, 62) of the protruding element (6) and comprises a single inlet port on the inner surface of the big end of the master connecting rod (1) and a respective outlet port on each of the coupling surfaces between said lobes (61, 62) and the ends of the pin (5)

Within the pin (5), which rotationally connects each articulated connecting rod (2) to a corresponding protruding element (6), a peripheral conduit (55) is defined that extends from the coupling surface between said pin (5) and said protruding element (6) to the means of rotational coupling between said pin (5) and said articulated connecting rod (2), specifically, according to the embodiment shown in the figures, to the sliding surface of said secondary bushing (7).

The peripheral conduit (55) comprises at least one inlet port on the coupling surface with the protruding element (6) and at least one outlet port on the coupling surface with the means of rotational connection of said articulated connecting rod (2), said inlet port of said peripheral conduit (55) being located in correspondence with a respective outlet port of said intermediate conduit (65) defined within the protruding element (6).

Internally to each articulated connecting rod (2) is defined a terminal conduit (25) extending from the big end to the small end of the articulated connecting rod and arranged according to the longitudinal axis of said articulated connecting rod. Specifically, said terminal conduit (25) extends from the surface of the big end of the articulated connecting rod (2) coupling with the secondary bushing (7) to the inner surface of the small end of the articulated connecting rod (2).

Across the thickness of each secondary bushing (7), a radial channel (71) is defined that develops in a radial direction with respect to the cylindrical body of the bushing and extends from the inner surface to the outer surface of the bushing. In other words, said radial channel (71) defines a trough-hole that goes through the thickness of said secondary bushings (7). The outlet port of said radial channel (71) is located in correspondence with the inlet port of the terminal conduit (25) defined in the corresponding articulated connecting rod (2).

The lubricant, due to the pressure exerted by the pump, is pushed into the main conduit (31) inside the crankshaft (3) and, passing through said one or more secondary conduits (32), flows into the circumferential channel (43) of each master bushing (4) then entering, through said first (41) and second (42) holes, respectively, into the longitudinal conduit (15) of a corresponding master connecting rod (1) and into the intermediate conduit (65) defined in each protruding element (6) that projects from the outer edge of said master connecting rod. Through said longitudinal conduit (15) the lubricant reaches the means of rotational coupling between the master connecting rod (1) and the corresponding piston (11), while through said intermediate conduit (65) the lubricant flows into the peripheral conduit (55) formed inside a pin (5), then passes through the radial channel (71) of the secondary bushing (7) entering the terminal conduit (25) inside the articulated connecting rod (2), thus reaching the means of rotational coupling between said articulated connecting rod (2) and the corresponding piston (21).

Good results are achieved with bushings made of polytetrafluoroethylene (PTFE).

Better results have been achieved by laying a special anti-friction coating on the bushings.

Preferably, the outer surface of the pin (5) is treated with a Diamond-like Carbon (DLC) coating, which is a carbon-based coating that improves sliding and abrasion resistance.

## Claims

1. Reciprocating compressor comprising a plurality of pistons sliding within respective cylinders, driven by the same crankshaft (3) and grouped in one or more modules,
wherein each of said modules comprises a first cylinder whose piston (11) is driven by means of a master connecting rod (1) rotationally coupled to said crankshaft by means of a master bushing (4) and one or more further cylinders whose pistons (21) are driven by means of a respective articulated connecting rod (2) whose big end is rotationally coupled, by means of a pin (5) and a secondary bushing (7), to a corresponding protruding element (6) projecting from the outer edge of the big end of said master connecting rod (1), so that the crankshaft drives all the cylinders of the same module by means of said master bushing (4) only,
wherein further said protruding element (6) comprises two lobes (61, 62) lying on parallel planes orthogonal to the axis of the crankshaft (3) and to the ends of which is connected a respective end of the corresponding pin (5), to the central portion of which is rotationally connected the respective articulated connecting rod (2) by means of the respective secondary bushing (7),
said reciprocating compressor being **characterised in that** it is further comprising a lubricant distribution network comprising:
- a main conduit (31) defined along the longitudinal axis of said crankshaft (3);
- one or more secondary conduits (32) defined within said crankshaft (3) in a direction transverse to the axis of said crankshaft (3), communicating with said main conduit (31) and extending to the outer lateral surface of said crankshaft (3);
- a first through-hole (41) and at least one second through-hole (42) defined on the outer surface of said master bushing (4) and communicating internally with a circumferential channel (43) defined on the inner surface of said master bushing (4), said circumferential channel (43) being placed in correspondence with a cross-section of the crankshaft (3) in which one or more secondary conduits (32) are defined;
- a longitudinal conduit (15) defined within the shaft of the master connecting rod (1), arranged along the longitudinal axis of said shaft, extending from the inner surface of the big end of the master connecting rod (1) to the inner surface of the small end of the master connecting rod (1), wherein the inlet port of said longitudinal conduit (15) communicates with said first through-hole (41) of the master bushing (4);
- an intermediate conduit (65) defined within each protruding element (6) and extending from the inner surface of the big end of the master connecting rod (1) to the coupling surface between said protruding element (6) and the corresponding pin (5) by means of which said protruding element (6) is rotationally connected to the corresponding articulated connecting rod (2), in which said intermediate conduit (65) develops within both said lobes (61, 62) and comprises a single inlet port on the inner surface of the big end of the master connecting rod (1) which communicates with said second through-hole (42) of the master bushing (4), and a respective outlet port on each of the coupling surfaces between said lobes (61, 62) and the ends of the pin (5), said outlet ports being in communication with corresponding inlet ports of a peripheral conduit (55) defined internally to said pin (5);
- a radial channel (71) defined in said secondary bushing (7) in a radial direction with respect to the cylindrical body of the bushing and extending from the inner surface to the outer surface of said bushing;
- a peripheral conduit (55) defined within said pin (5) communicating with said intermediate conduit (65) of said protruding element (6) and with said radial channel (71) of said secondary bushing (7);
- a terminal conduit (25) defined longitudinally in each articulated connecting rod (2) and extending from the inner surface of the big end to the inner surface of the small end of the articulated connecting rod (2), in which the inlet port of said terminal conduit (25) communicates with the outlet port of said radial channel (71).

2. Reciprocating compressor according to the preceding claim **characterized in that** the outer surface of said pin (5) includes a carbon-based coating to improve sliding and abrasion resistance.

3. Reciprocating compressor according to one of the preceding claims **characterized in that** one end of said main conduit (31) is connected to the output of an oil pump.

4. Reciprocating compressor according to one of the preceding claims **characterized in that** the outer surface of the bushings includes an anti-friction coating.

## Patentansprüche

1. Kolbenkompressor mit mehreren Kolben, die in entsprechenden Zylindern gleiten, von derselben Kurbelwelle (3) angetrieben werden und in einem oder mehreren Modulen gruppiert sind, wobei jedes der Module einen ersten Zylinder umfasst, dessen Kolben (11) mittels einer Hauptpleuelstange (1) angetrieben wird, die über eine Hauptbuchse (4) drehfest mit der Kurbelwelle verbunden ist, sowie einen oder mehrere weitere Zylinder, deren Kolben (21) mittels einer jeweiligen Gelenkverbindungsstange (2) angetrieben werden, deren großes Ende über einen Bolzen (5) und eine zweite Buchse (7) drehbar mit einem entsprechenden vorstehenden Element (6) verbunden ist, das aus dem äußeren Rand des großen Endes der Hauptpleuelstange (1) herausragt, so dass die Kurbelwelle alle Zylinder desselben Moduls nur mittels der Hauptbuchse (4) antreibt,
wobei das vorstehende Element (6) zwei Nocken (61, 62) umfasst, die auf parallelen Ebenen orthogonal zur Achse der Kurbelwelle (3) liegen und an deren Enden jeweils ein Ende des entsprechenden Bolzens (5) angebracht ist, wobei der mittlere Abschnitt mittels der jeweiligen zweiten Buchse (7) drehbar mit der jeweiligen Gelenkverbindungsstange (2) verbunden ist,
wobei der Kolbenkompressor **dadurch gekennzeichnet ist, dass** er ferner ein Schmiermittelverteilungsnetzwerk umfasst, das Folgendes beinhaltet:
- eine Hauptleitung (31), die entlang der Längsachse der Kurbelwelle (3) definiert ist;
- eine oder mehrere sekundäre Leitungen (32), die innerhalb der Kurbelwelle (3) in einer Richtung quer zur Achse der Kurbelwelle (3) definiert sind, mit der Hauptleitung (31) in Verbindung stehen und sich bis zur äußeren Seitenfläche der Kurbelwelle (3) erstrecken;
- eine erste Durchgangsbohrung (41) und mindestens eine zweite Durchgangsbohrung (42), die an der Außenfläche der Hauptbuchse (4) definiert sind und intern mit einem umlaufenden Kanal (43) in Verbindung stehen, der an der Innenfläche der Hauptbuchse (4) definiert ist und mit einem umlaufenden Kanal (43) in Verbindung steht, der in Übereinstimmung mit einem Querschnitt der Kurbelwelle (3) angeordnet ist, in dem eine oder mehrere sekundäre Leitungen (32) definiert sind;
- eine längs verlaufende Leitung (15), die innerhalb der Welle der Hauptpleuelstange (1) definiert ist, entlang der Längsachse der Welle angeordnet ist und sich von der Innenfläche des großen Endes der Hauptpleuelstange (1) bis zur Innenfläche des kleinen Endes der Hauptpleuelstange (1) erstreckt, wobei die Einlassöffnung der längs verlaufenden Leitung (15) mit der ersten Durchgangsbohrung (41) der Hauptbuchse (4) verbunden ist;
- eine Zwischenleitung (65), die innerhalb jedes vorstehenden Elements (6) definiert ist und sich von der Innenfläche des großen Endes der Hauptpleuelstange (1) bis zur Kupplungsfläche zwischen dem vorstehenden Element (6) und dem entsprechenden Bolzen (5) erstreckt, mittels dem das vorstehende Element (6) drehbar mit der entsprechenden Gelenkverbindungsstange (2) verbunden ist, wobei sich die Zwischenleitung (65) innerhalb beider Nocken (61, 62) erstreckt und eine einzige Einlassöffnung an der Innenfläche des großen Endes der Hauptpleuelstange (1) umfasst, die mit der zweiten Durchgangsbohrung (42) der Hauptbuchse (4) in Verbindung steht, und eine jeweilige Auslassöffnung an jeder der Kupplungsflächen zwischen den Nocken (61, 62) und den Enden des Bolzens (5) besitzt, wobei die Auslassöffnungen mit entsprechenden Einlassöffnungen einer peripheren Leitung (55) in Verbindung stehen, die innerhalb des Bolzens (5) definiert ist;
- einen radialen Kanal (71), der in der zweiten Buchse (7) in radialer Richtung in Bezug auf den zylindrischen Körper der Buchse definiert ist und sich von der Innenfläche zur Außenfläche der Buchse erstreckt;
- eine periphere Leitung (55), die innerhalb des Bolzens (5) definiert ist und mit der Zwischenleitung (65) des vorstehenden Elements (6) und mit dem radialen Kanal (71) der zweiten Buchse (7) in Verbindung steht;
- eine Endleitung (25), die in Längsrichtung in jeder Gelenkverbindungsstange (2) definiert ist und sich von der Innenfläche des großen Endes bis zur Innenfläche des kleinen Endes der Gelenkverbindungsstange (2) erstreckt, wobei die Einlassöffnung der Endleitung (25) mit der Auslassöffnung des radialen Kanals (71) in Verbindung steht.

2. Kolbenkompressor gemäß dem vorstehenden Anspruch, **dadurch gekennzeichnet, dass** die Außenfläche des Bolzens (5) eine Beschichtung auf Kohlenstoffbasis aufweist, um die Gleitfähigkeit und Abriebfestigkeit zu verbessern.

3. Kolbenkompressor gemäß einem der vorstehenden Ansprüche, **dadurch gekennzeichnet, dass** ein Ende der Hauptleitung (31) mit dem Ausgang einer Ölpumpe verbunden ist.

4. Kolbenkompressor gemäß einem der vorstehenden Ansprüche, **dadurch gekennzeichnet, dass** die Außenfläche der Buchsen eine reibungsmindernde Beschichtung aufweist.

## Revendications

1. Compresseur alternatif, comprenant une pluralité de pistons coulissant à l'intérieur de cylindres respectifs, entraînés par un même vilebrequin (3) et regroupés en un ou plusieurs modules,
dans lequel chacun desdits modules comprend un premier cylindre dont le piston (11) est entraîné au moyen d'une bielle maîtresse (1) couplée en rotation audit vilebrequin par l'intermédiaire d'une bague maîtresse (4), ainsi qu'un ou plusieurs cylindres supplémentaires dont les pistons (21) sont entraînés au moyen d'une bielle articulée respective (2), dont le pied est couplé en rotation, au moyen d'un axe (5) et d'une bague secondaire (7), à un élément saillant correspondant (6) faisant saillie à partir du bord extérieur du pied de ladite bielle maîtresse (1), de sorte que le vilebrequin entraîne tous les cylindres d'un même module uniquement au moyen de ladite bague maîtresse (4),
dans lequel, en outre, ledit élément saillant (6) comprend deux lobes (61, 62) disposés dans des plans parallèles orthogonaux à l'axe du vilebrequin (3), aux extrémités desquels est connecté un extrémité respective de l'axe (5), la partie centrale de celui-ci étant reliée en rotation à la bielle articulée respective (2) au moyen de la bague secondaire correspondante (7),
ledit compresseur étant **caractérisé en ce qu'il** comprend en outre un réseau de distribution de lubrifiant comprenant :
- un conduit principal (31) défini le long de l'axe longitudinal dudit vilebrequin (3) ;
- un ou plusieurs conduits secondaires (32) définis à l'intérieur dudit vilebrequin (3) dans une direction transversale à l'axe dudit vilebrequin (3), communiquant avec ledit conduit principal (31) et s'étendant jusqu'à la surface latérale extérieure dudit vilebrequin (3) ;
- un premier trou traversant (41) et au moins un second trou traversant (42) définis sur la surface extérieure de ladite bague maîtresse (4) et communiquant intérieurement avec une gorge circonférentielle (43) définie sur la surface intérieure de ladite bague maîtresse (4), ladite gorge circonférentielle (43) étant disposée en correspondance avec une section du vilebrequin (3) dans laquelle sont définis un ou plusieurs conduits secondaires (32) ;
- un conduit longitudinal (15) défini à l'intérieur de la tige de la bielle maîtresse (1), disposé selon l'axe longitudinal de ladite tige et s'étendant depuis la surface intérieure du pied de la bielle maîtresse (1) jusqu'à la surface intérieure de la tête de la bielle maîtresse (1), dans lequel l'orifice d'entrée dudit conduit longitudinal (15) communique avec ledit premier trou traversant (41) de la bague maîtresse (4) ;
- un conduit intermédiaire (65) défini à l'intérieur de chaque élément saillant (6) et s'étendant depuis la surface intérieure du pied de la bielle maîtresse (1) jusqu'à la surface d'accouplement entre ledit élément saillant (6) et l'axe correspondant (5), par l'intermédiaire duquel ledit élément saillant (6) est relié en rotation à la bielle articulée correspondante (2), ledit conduit intermédiaire (65) se développant à l'intérieur des deuxdits lobes (61, 62) et comprenant un unique orifice d'entrée sur la surface intérieure du pied de la bielle maîtresse (1), lequel communique avec ledit second trou traversant (42) de la bague maîtresse (4), ainsi qu'un orifice de sortie respectif sur chacune des surfaces d'accouplement entre lesdits lobes (61, 62) et les extrémités de l'axe (5), lesdits orifices de sortie communiquant avec des orifices d'entrée correspondants d'un conduit périphérique (55) défini à l'intérieur de l'axe (5) ;
- un canal radial (71) défini dans ladite bague secondaire (7), dans une direction radiale par rapport au corps cylindrique de ladite bague, et s'étendant depuis la surface intérieure jusqu'à la surface extérieure de ladite bague ;
- un conduit périphérique (55) défini à l'intérieur de l'axe (5), communiquant avec ledit conduit intermédiaire (65) de l'élément saillant (6) et avec ledit canal radial (71) de la bague secondaire (7) ;
- un conduit terminal (25) défini longitudinalement dans chaque bielle articulée (2) et s'étendant depuis la surface intérieure du pied jusqu'à la surface intérieure de la tête de la bielle articulée (2), dans lequel l'orifice d'entrée dudit conduit terminal (25) communique avec l'orifice de sortie dudit canal radial (71).

2. Compresseur alternatif selon la revendication précédente, **caractérisé en ce que** la surface extérieure dudit axe (5) comprend un revêtement à base de carbone destiné à améliorer les propriétés de glissement et la résistance à l'abrasion.

3. Compresseur alternatif selon l'une quelconque des revendications précédentes, **caractérisé en ce qu'**une extrémité dudit conduit principal (31) est raccordée à la sortie d'une pompe à huile.

4. Compresseur alternatif selon l'une quelconque des revendications précédentes, **caractérisé en ce que** la surface extérieure desdites bagues comprend un revêtement antifriction.
